# EUROPÄISCHE PATENTSCHRIFT

(11) **EP 1 052 048 B1**
(45) Veröffentlichungstag und Bekanntmachung des Hinweises auf die Patenterteilung: **23.06.2004**
(21) Anmeldenummer: 00108744.4
(22) Anmeldetag: 22.04.2000
(51) Int. Cl.: B23B 41/12, B23Q 3/155

(54) **Werkzeugmaschine zum Bearbeiten von Kurbelwellen**
Machine tool for working crankshafts
Machine outil pour l'usinage des vilebrequins

(30) Priorität: 05.05.1999 DE 29907963 U
(43) Veröffentlichungstag der Anmeldung: 15.11.2000
(73) Patentinhaber: Honsberg Lamb Sonderwerkzeugmaschinen GmbH, 42855 Remscheid (DE)
(72) Erfinder: Quak, Andreas, 40699 Erkrath (DE); Dey, Hans-Joachim, 40699 Erkrath (DE)
(74) Vertreter: Selting, Günther, Dipl.-Ing.

(56) Entgegenhaltungen:
- EP-A- 0 483 781
- DE-A- 19 510 498
- PATENT ABSTRACTS OF JAPAN vol. 009, no. 111 (M-379), 15. Mai 1985 (1985-05-15) & JP 59 232707 A (HONDA GIKEN KOGYO KK), 27. Dezember 1984 (1984-12-27)

## Beschreibung

Die Erfindung betrifft eine Werkzeugmaschine zum Bearbeiten von Kurbelwellen und insbesondere zum Bohren von Ölbohrungen als Schrägbohrungen in Kurbelwellen.

Kurbelwellen haben entlang ihrer Hauptachse mehrere Hauptlager und an den Abkröpfungen Hublager. Zur Schmierung der Hublager werden Schrägbohrungen angebracht, die sich von einem Hublager durch die Abkröpfung hindurch in das Hauptlager erstrecken. Solche Bohrungen sind relativ lang und ihre Herstellung erfordert eine sehr präzise Schrägausrichtung der Kurbelwelle.

Eine Werkzeugmaschine zur Erzeugung von Bohrungen in Kurbelwellen, von der der Oberbegriff des Patentanspruchs 1 ausgeht, ist beschrieben in US 5 759 140. Diese Werkzeugmaschine weist einen Werkstückträger mit zwei Aufspannvorrichtungen auf, wobei zwei Kurbelwellen synchron bearbeitet werden können.

Der Werkstückträger ist hierbei jedoch um eine horizontale Querachse schwenkbar, wobei er eine solche Schrägstellung einnehmen kann, dass die horizontal ausgerichteten und horizontal geführten Werkzeuge die Kurbelwellen unter dem gewünschten Bohrwinkel treffen. Zur Anbringungen mehrerer Bohrungen an unterschiedlichen Stellen der Kurbelwellenlänge wird der Spindelkasten in vertikaler Richtung gesteuert verschoben. Den in die Spindeln eingesetzten Werkzeugen (Bohrern) sind jeweils Bohrbuchsen zugeordnet. Die Werkzeuge und Bohrbuchsen werden einem Werkmagazin entnommen und können automatisch gewechselt werden.

Eine weitere Werkzeugmaschine ist beschrieben in JP 59232707 A. Die Werkzeugmaschine weist einen auf einem horizontalen Drehteller angeordneten Werkstückträger auf, an dem Kurbelwellen in horizontaler Ausrichtung befestigt werden. Zwei von entgegengesetzten Richtungen her wirkende Spindeln, die jeweils ein Bohrwerkzeug tragen, sind auf die Kurbelwellen gerichtet.

DE 195 10 498 A1 beschreibt eine Werkzeugmaschine, bei der ein Ständer in horizontaler Richtung verfahrbar ist. Der Ständer trägt einen in vertikaler Richtung verfahrbaren Spindelkasten, an dessen Spindel ein Werkzeug befestigt ist. Der Werkstückträger ist ein Drehteller, der um eine vertikale Achse drehbar ist. Der Drehteller ist in Anstellrichtung, also zum Werkzeug hin, verfahrbar. Ein Werkzeugmagazin mit einem Werkzeugwechsler ist dazu vorgesehen, das Werkzeug an der Spindel auszuwechseln.

In EP 0 483 781 A2 ist eine Werkzeugmaschine mit einem Werkzeugmagazin und einem zugehörigen Werkzeugwechsler beschrieben. Zur Bearbeitung von Kurbelwellen ist diese Werkzeugmaschine nicht speziell bestimmt.

Der Erfindung liegt die Aufgabe zugrunde, eine verbesserte Werkzeugmaschine zur Bearbeitung von Kurbelwellen mit horizontal ausgerichteter Spindel zu schaffen, die in räumlicher und kinematischer Hinsicht vereinfacht ist und eine einfache Zuführung der Kurbelwellen ermöglicht.

Die Lösung dieser Aufgabe erfolgt erfindungsgemäß mit den im Anspruch 1 angegebenen Merkmalen.

Der Werkstückträger hat zwei übereinander angeordnete Aufspannvorrichtungen, so dass zwei Kurbelwellen parallel und übereinander gleichzeitig bearbeitet werden können. Die Aufspannvorrichtungen sind an einem um eine horizontale Achse schwenkbaren Halter angebracht, der zum Wechseln der Werkstücke von einer vertikalen Position in eine horizontale Position schwenkbar ist.

Bei der erfindungsgemäßen Werkzeugmaschine wird der Werkstückträger zur Erzeugung der Schrägbohrungen um eine vertikale Achse gedreht. Somit wird die Kurbelwelle stets in horizontaler Ausrichtung gehalten. Der erforderliche Schrägwinkel wird in einer hori-zontalen Ebene eingestellt. Die Kurbelwelle wird also mit hori-zontaler Kurbelwellenebene fixiert, während die Schrägstellung durch Drehen des Drehtellers bewirkt wird. Dadurch wird insbesondere auch der für die Kurbelwellenbearbeitung und den Kur-belwellenwechsel benötigte Platzbedarf verringert. Der um eine vertikale Achse drehbare Drehteller hält die Kurbelwelle stets in horizontaler Ausrichtung fest, so daß es möglich ist, die Kurbelwelle mit horizontal verlaufender Längsachse zuzuführen und einzusetzen.

Gemäß einer bevorzugten Weiterbildung der Erfindung ist der Drehteller von einem gesteuert horizontal bewegbaren Horizontalschlitten getragen. Dieser Horizontalschlitten ermöglicht das inkrementale Weiterbewegen der Kurbelwelle von einer Bohrung zur nächsten. Diese Weiterbewegen erfolgt durch Verlagrung des Werkstücks (der Kurbelwelle), während die Position des Spindelkastens quer zur Achsrichtung der Spindel festbleibt. Die Bewegung des Horizontalschlittens, der den Werkstückträger aufweist, ist wegen der geringeren Masse leichter, präzise und schnell zu steuern, so daß eine entsprechende Bewegung des Spindelkastens in Querrrichtung nicht erforderlich ist.

Vorzugsweise ist der Spindelkasten an einem Vertikalschlitten an einem feststehenden Ständer zwischen einer Arbeitsposition und einer Hubposition vertikal verfahrbar. In Höhe der Hubposition befindet sich ein Werkzeugmagazin für eine direkte Werkzeugübergabe zu und von der Spindel. Während des Bearbeitungsvorganges bleibt der Spindelkasten stets auf der Höhe der Arbeitsposition. Der Spindelkasten kann vertikal verstellt werden, da die herzustellenden Bohrungen im Regelfall nicht auf der Lagermitte liegen. Ferner dient die vertikale Verstellung dazu, den Spindelkasten auf eine Hubposition fahren zu können, in der er mit einem Werkzeugmagazin zusammenarbeitet. Dieses Werkzeugmagazin befindet sich oberhalb der Bearbeitungsebene, so daß es auch leicht möglich ist, die im Werkzeugmagazin befindlichen Werkzeuge während des Betriebes der Werkzeugmaschine auszuwechseln.

Gemäß einer bevorzugten Weiterbildung der Erfindung ist vorgesehen, dass der Spindelkasten für jede Spindel eine zugeordnete Bohrbuchsenstange aufweist, die eine auswechselbare Bohrbuchse trägt und unabhängig von der zugehörigen Spindel in Längsrichtung bewegbar ist. Die Bohrbuchsen dienen zur Führung der Bohrer und werden gegen das Werkstück gesetzt. Die Bohrbuchsenhalter sind mit einem eigenen Antrieb versehen, um bis zu der jeweiligen Stelle des Werkstücks aus dem Vertikalschlitten herausgefahren zu werden. Während das Werkzeug mit dem Spindelkasten in Achsrichtung der Spindel verfahren wird, steht der Bohrbuchsenhalter von dem Vertikalschlitten ab, der den Spindelkasten trägt. Dadurch bleibt die Bohrbuchse während des Bohrvorschubes fest. Die Längsverstellbarkeit der Bohrbuchse ist erforderlich, um die Bohrbuchse auf den jeweiligen Abstand der in horizontaler Ebene schrägstehenden Kurbelwelle einstellen zu können.

Das Werkzeugmagazin weist ein erstes Umlaufmagazin für Werkzeuge und ein zweites Umlaufmagazin für Bohrbuchsen auf. Vorzugsweise sind beide Umlaufmagazine unabhängig voneinander gesteuert angetrieben, derart, daß unterschiedliche Werkzeuge mit derselben Bohrbuchse ausrichtbar sind. Normalerweise verschleißen die Werkzeuge schneller als die Bohrbuchsen. Es ist daher möglich, dieselbe Bohrbuchse für mehrere Werkzeuge zu verwenden. Die unabhängige Steuerung der beiden Umlaufmagazine ermöglicht es, Werkzeug und Bohrbuchse beliebig miteinander zu kombinieren.

Im folgenden wird unter Bezugnahme auf die Zeichnungen ein bevorzugtes Ausführungsbeispiel der Erfindung näher erläutert.

Es zeigen:
- Fig. 1: eine schematische perspektivische Gesamtansicht der Werkzeugmaschine,
- Fig. 2: eine Frontansicht aus Richtung des Pfeiles II von Fig. 1,
- Fig. 3: eine Seitenansicht aus Richtung des Pfeiles III von Fig. 1,
- Fig. 4: einen Schnitt in der Ebene IV-IV von Fig. 1, und
- Fig. 5: eine Draufsicht aus Richtung des Pfeiles V von Fig. 1.

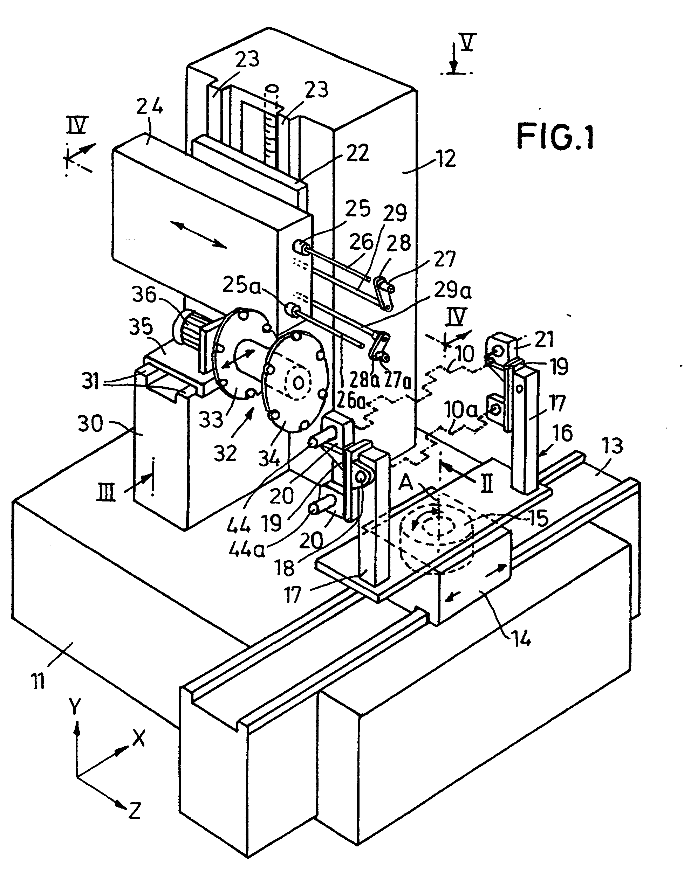

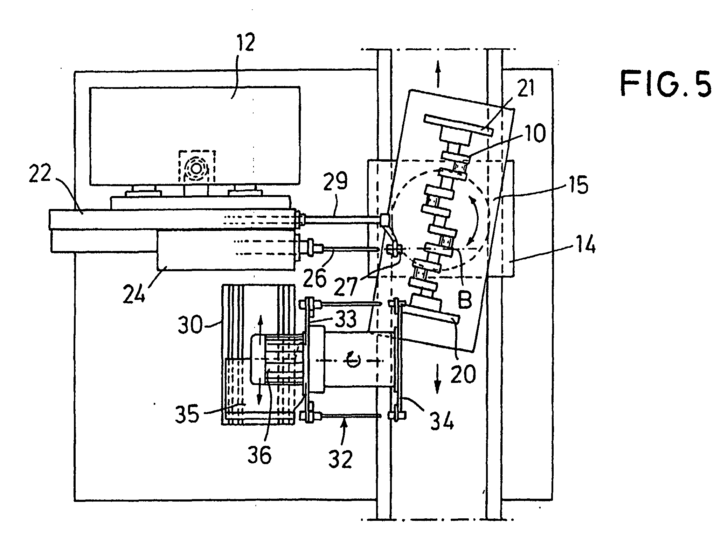

Die Werkzeugmaschine dient zur Bearbeitung von Kurbelwellen, im vorliegenden Fall zur gleichzeitigen Bearbeitung von zwei Kurbelwellen 10,10a, die in Fig. 1 nur schematisch dargestellt sind. In Fig. 5 ist die Kurbelwelle 10 detaillierter erkennbar.

Die Werkzeugmaschine weist ein Maschinenbett 11 auf, von dem ein Ständer 12 aufragt. Das Maschinenbett 11 ist mit einer Horizontalführung 13 versehen, auf der ein Horizontalschlitten 14 gesteuert verfahrbar ist. Der Horizontalschlitten 14 trägt auf einem Drehteller 15 einen Werkstückträger 16. Der Werkstückträger 16 weist zwei von dem Drehteller 15 aufragende Pfosten 17 auf, die jeweils einen um eine horizontale Achse 18 schwenkbaren Halter 19 mit zwei Aufspannvorrichtungen 20,21 für eine Kurbelwelle tragen. Die Aufspannvorrichtung 20 an dem einen Ende ist ein Spannfutter, das an einem Flansch der Kurbelwelle angreift, während die andere Spannvorrichtung 21 als Reitstock ausgebildet ist. Die Aufspannvorrichtungen 20,21 halten die jeweilige Kurbelwelle 10 bzw. 10a lagerichtig fest. Die Aufspannvorrichtungen haben jedoch auch einen (nicht dargestellten) Drehantrieb, um die eingespannte Kurbelwelle für die Bohrpositionen separat zu drehen.

An dem Ständer 12 ist ein in der Höhe verfahrbarer Vertikalschlitten 22 entlang einer Vertikalführung 23 gesteuert verfahrbar. Der Vertikalschlitten 22 trägt einen Spindelkasten 24, der an dem Vertikalschlitten horizontal verfahrbar ist. Der Spindelkasten 24 enthält zwei Spindeln 25,25a, die übereinander in einer vertikalen Ebene angeordnet sind. In die Werkzeugaufnahme der Spindeln 25,25a ist jeweils ein Werkzeug 26,26a eingespannt. Bei diesen Werkzeugen handelt es sich um langgestreckte Bohrer zur Erzeugung der Schrägbohrungen in den Kurbelwellen.

Jedem Werkzeug 26,26a ist eine Bohrbuchse 27,27a zugeordnet. Die Bohrbuchsen sind an einem Bohrbuchsenhalter 28,28a auswechselbar befestigt, der von einer Bohrbuchsenstange 29,29a getragen wird. Die Bohrbuchsenstangen 29 und 29a stehen von dem Vertikalschlitten 22 ab und sie sind gesteuert durch jeweils einen am Vertikalschlitten 22 vorgesehenen (nicht dargestellten) Antrieb in Längsrichtung verschiebbar. Im Vertikalschlitten 22 oder im Spindelkasten 24 ist die Bohrbuchsenstange axial verschiebbar gelagert und kann durch eine eigenständige Verstelleinrichtung (hier Hydraulikzylinder) in mehreren axialen Positionen relativ zu dem Werkzeug positioniert werden.

Diese Positionen sind nötig, um
a) die Bohrbuchse über den Bohrer zu verfahren (nach Werkzeugwechsel),
b) die Bohrbuchse über den Bohrer nach vorne herauszuziehen (vor Werkzeugwechsel),
c) den Einsatz eines weiteren Werkzeugs (zum Entgraten), das keine Bohrbuchse benötigt, zu ermöglichen.

Vor einer Bohrbearbeitung wird der Spindelkasten 24 gemäß a) so weit an das Werkstück gefahren, bis ein Kontakt unter einer gewissen Anpreßkraft zum Werkstück entsteht. Die Bohrbuchse bleibt während des nachfolgenden Bohrvorgangs immer in Kontakt mit dem Werkstück, was durch eine gesteuerte/geregelte Bewegung der Bohrbuchsenstange/-halter im Spindelkasten relativ zu dem NC-gesteuerten Bohrvorschub erfolgt. Hierbei wird der Druck in dem Hydraulikzylinder konstantgehalten, wodurch sich eine Relativbewegung zwischen dem Bohrer und der Bohrbuchse erzielen läßt.

In Fig. 1 ist das X,Y,Z-Koordinatensystem der Werkzeugmaschine dargestellt. Die X-Achse verläuft parallel zu der Horizontalführung 13, die Y-Achse ist die Vertikalachse, längs der der Vertikalschlitten 22 verfahren wird, die Z-Achse gibt die Ausrichtung der Spindeln 25,25a an.

Auf dem Maschinenbett 11 steht ein Sockel 30, auf dem längs einer in X-Richtung verlaufenden Führung 31 das Werkzeugmagazin 32 verfahrbar ist. Das Werkzeugmagazin 32 besteht aus zwei scheibenförmig ausgebildeten Umlaufmagazinen 33 und 34. Das Umlaufmagazin 33 trägt an den umfangsmäßig verteilt angeordneten Magazinpositionen Werkzeuge, während das Umlaufmagazin 34 Bohrbuchsen enthält. Jeweils einer Magazinstelle des Umlaufmagazins 33 ist eine Magazinstelle des Umlaufmagazins 34 zugeordnet, jedoch können beide Umlaufmagazine relativ zueinander verdrehbar sein, so daß diese Zuordnung geändert werden kann. Das Werkzeugmagazin 32 weist einen Horizontalschlitten 35 auf, der einen Antrieb 36 für die Umlaufmagazine 33 und 34 trägt. Der Horizontalschlitten 35 kann zwischen einer Warteposition und einer Wechselposition verfahren werden. In der Wechselposition befinden sich zwei Werkzeuge des Umlaufmagazins 33 und zwei Bohrbuchsen des Umlaufmagazins 34 in axialer Ausrichtung mit den Spindeln 25 und 25a bzw. mit den Bohrbuchsenhaltern 28,28a. Die Magazinstellen der beiden Umlaufmagazine sind seitlich offen. Die Werkzeuge und Bohrbuchsen, die in den Umlaufmagazinen enthalten sind, werden klemmend festgehalten. Die Übergabe zu den Spindeln 25,25a und Bohrbuchsenhaltern 28,28a erfolgt jeweils im Pick-up-Verfahren. Dabei wird die betreffende Magazinstelle in eine Wechselposition vor dem Spindelkasten 24 in axialer Ausrichtung mit der jeweiligen Spindel 25 bzw. 25a gebracht. Die Spindel ergreift das in der Wechselposition befindliche Werkzeug durch Vorschieben und Festspannen und der Bohrbuchsenhalter ergreift die in der Wechselposition befindliche Bohrbuchse. Hat die Spindel das Werkzeug und der Bohrbuchsenhalter die Bohrbuchse gespannt, fährt das Werkzeugmagazin 32 in die Warteposition zurück, d.h. das Werkzeugmagazin selbst "greift" bzw. "entläßt" die Werkzeuge aus seiner Spannzange. Der Werkzeugwechsel erfolgt also ohne gesonderte Werkzeugwechsler oder Transfervorrichtungen.

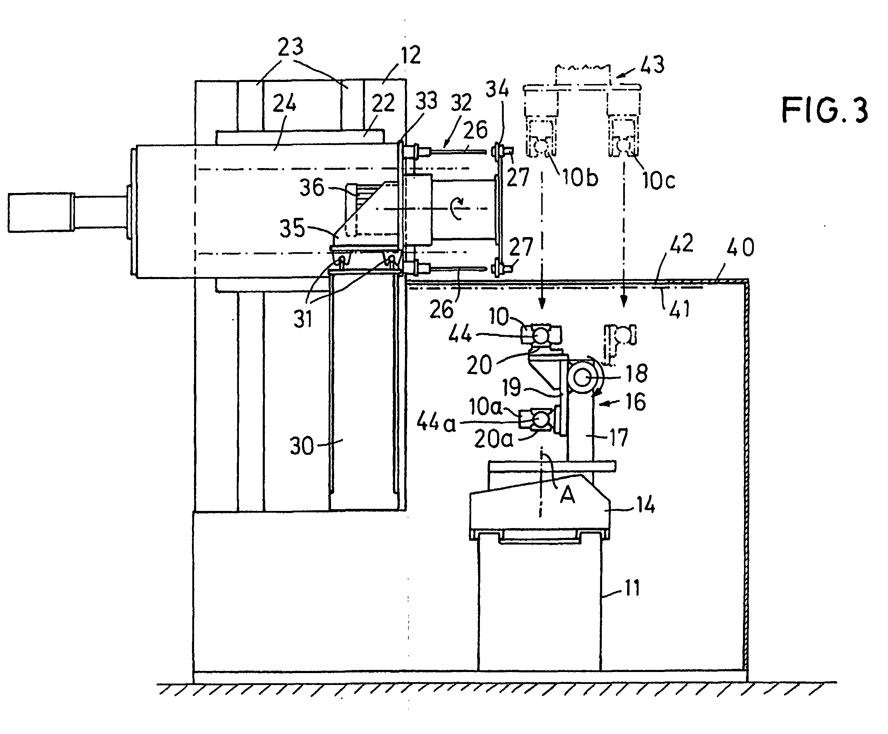

Aus der Seitenansicht von Fig. 3 ergibt sich, daß der Horizontalschlitten 14 mit dem Werkstückträger 16 in einem kastenförmigen Gehäuse 40 untergebracht ist, das eine von einem verschiebbaren Deckel 41 zu verschließende Öffnung 42 in der Oberwand aufweist. Durch die Öffnung 42 kann eine Beschickungsvorrichtung 43 abgesenkt werden, die zwei zu bearbeitende Kurbelwellen 10b und 10c in horizontalen nebeneinanderliegender Form enthält. Zur Aufnahme der neuen Kurbelwellen wird der Halter 19 um die horizontale Achse 18 herum geschwenkt, so daß die Aufspannvorrichtungen 20,20a für die beiden Kurbelwellen, die normalerweise vertikal übereinander liegen, nunmehr horizontal nebeneinander liegen. Durch Absenken der Übergabevorrichtung 43 werden die Kurbelwellen 10b,10c an die Aufspannvorrichtungen 20,20a übergeben. Dann wird der Halter 19 wieder in die vertikale Position zurückgeschwenkt.

Aus Fig. 3 ist auch ersichtlich, daß das Werkzeugmagazin 32 außerhalb des Gehäuses 40 angeordnet ist. Für einen Werkzeugwechsel wird der Spindelkasten 24 durch die Öffnung 42 hindurch über die Oberwand 40 hinaus auf die Höhe des Werkzeugmagazins 32 hochgefahren, so daß das Werkzeugmagazin 32 seitlich an die Spindeln 25,25a bzw. die Bohrbuchsenhalter 28,28a herangefahren werden kann.

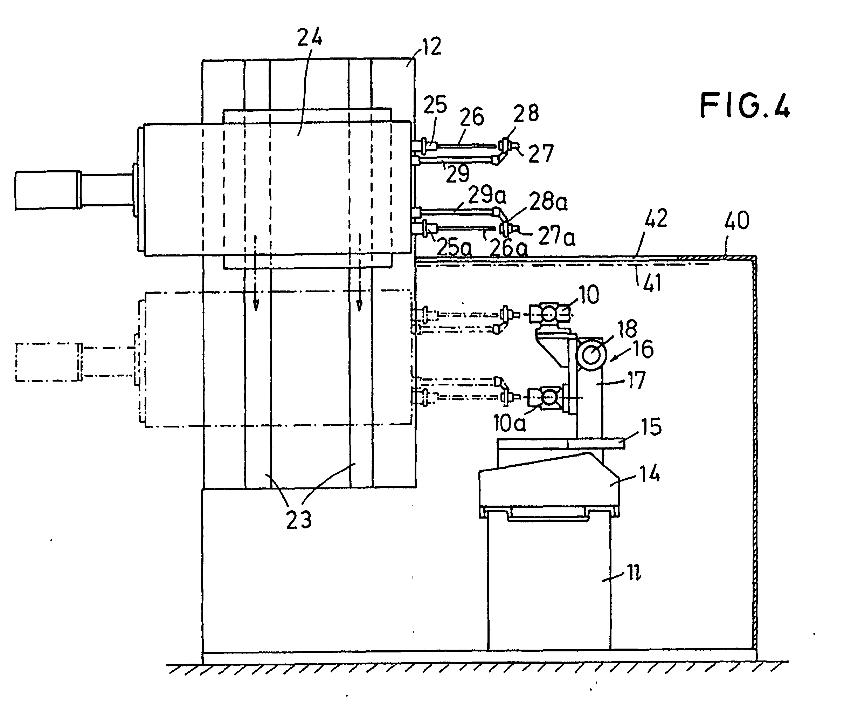

In Fig. 4 ist der Spindelkasten 24 im angehobenen Zustand dargestellt, also während des Werkzeugwechsels auf der Höhe des Werkzeugmagazins 32. Danach wird der Spindelkasten 24 in die strichpunktiert dargestellte Position heruntergefahren und dann wird die Öffnung 42 mit dem Deckel 41 verschlossen. Zweckmäßigerweise wird eine zweite Öffnung vorgesehen, die unabhängig von der Öffnung 42 dazu dient, das Verfahren des Spindelkastens in die Werkzeugwechselposition zu ermöglichen. Dieser zweiten Öffnung ist ein eigener zweiter Deckel zugeordnet. Die Werkstückbearbeitung erfolgt in dem geschlossenen Gehäuse 40, um Verschmutzungen der Umgebung durch Bohrflüssigkeit zu vermeiden. Nach Beendigung der Werkstückbearbeitung wird der Werkstückträger um die Achse 18 herum geschwenkt, so daß die Werkstücke von der Übergabevorrichtung übernommen und nebeneinanderliegend aus der Öffnung 42 herausgehoben werden können.

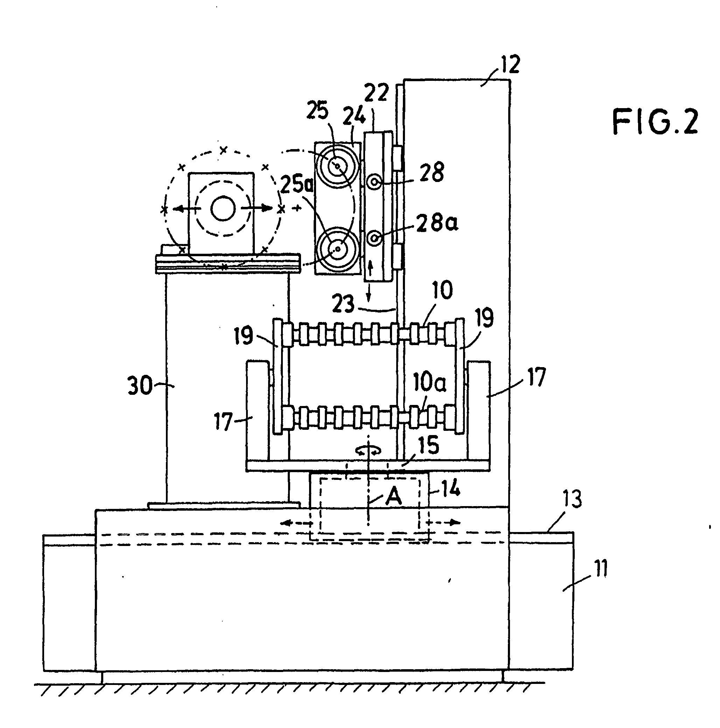

Fig. 5 zeigt die Draufsicht der Werkzeugmaschine während der Werkstückbearbeitung. Der Drehteller 15, auf dem die Kurbelwellen festgespannt sind, ist um einen geringen Drehwinkel um die vertikale Achse A (Figuren 1,2 und 5) gedreht, so daß das Bohrwerkzeug 26 mit seiner Längsachse B (Fig. 5) schräg durch einen Kurbelarm der Kurbelwelle 10 hindurchgeht. Nach dem Bohren entlang der Achse B wird der Horizontalschlitten 14 entlang der X-Achse gesteuert bewegt und bei Bedarf wird die Kurbelwelle durch einen gesteuerten Drehantrieb 44 bzw. 44a um ihre Längsachse gedreht und dadurch erneut winkelpositioniert, um eine andere Schrägbohrung herstellen zu können. Vor Durchführung des Bohrvorganges wird die Bohrbuchse 27 gegen die Kurbelwelle 10 gesetzt und während des Bohrvorganges wird der Spindelkasten 24 in Z-Richtung vorgeschoben.

Nach Beendigung sämtlicher Bohrvorgänge wird der Drehteller 15 wieder in seine neutrale Position gedreht und der Halter 19 wird gemäß Fig. 3 von der vertikalen Bearbeitungsposition in die horizontale Werkstückwechselposition hochgeschwenkt. Dann werden die bearbeiteten Kurbelwellen 10,10a durch die Öffnung 42 hindurch entfernt.

## Patentansprüche

1. Werkzeugmaschine zum Bearbeiten von Kurbelwellen mit
einem Spindelkasten (24), der mindestens zwei ein Werkzeug (26,26a) antreibende Spindeln (25,25a) aufweist, und
einem Werkstückträger (16) mit zwei Aufspannvorrichtungen (20,21) zum Halten von zwei Kurbelwellen (10a,10b), wobei der Werkstückträger (16) derart schwenkbar ist, dass die Längsachse der aufgespannten Kurbelwellen unter einem spitzen Winkel zur Achsrichtung der Spindeln(25,25a) verläuft,
**dadurch gekennzeichnet, dass**
der Werkstückträger (16) die Kurbelwellen mit horizontal verlaufenden Längsachsen trägt, auf einem um eine vertikale Achse (A) schwenkbaren Drehteller (15) angeordnet ist und einen um eine horizontale Achse (18) schwenkbaren Halter (19) aufweist, an dem die Aufspannvorrichtungen (20) übereinander angeordnet sind und der zum Wechseln der Werkstücke (10,10a) von einer vertikalen Position in eine horizontale Position schwenkbar ist.

2. Werkzeugmaschine nach Anspruch 1, **dadurch gekennzeichnet, dass** der Drehteller (15) von einem gesteuert horizontal bewegbaren Horizontalschlitten (14) getragen ist.

3. Werkzeugmaschine nach Anspruch 1 oder 2, **dadurch gekennzeichnet, dass** der Spindelkasten (24) an einem Vertikalschlitten (22) in Richtung der Spindelachse verschiebbar montiert ist, welcher an einem feststehenden Ständer (12) zwischen einer Arbeitsposition und einer Hubposition vertikal verfahrbar ist, und dass in der Höhe der Hubposition ein Werkzeugmagazin (32) für eine direkte Werkzeugübergabe zu und von der Spindel (25,25a) angeordnet ist.

4. Werkzeugmaschine nach Anspruch 3, **dadurch gekennzeichnet, dass** das Werkzeugmagazin (32) mindestens ein Umlaufmagazin (33,34) aufweist, das quer zur Längsachse der Spindel (25,25a) horizontal bewegbar ist.

5. Werkzeugmaschine nach einem der Ansprüche 1-4, **dadurch gekennzeichnet, dass** der Spindelkasten (24) oder der Vertikalschlitten (22) für jede Spindel (25,25a) eine zugeordnete Bohrbuchsenstange (29,29a) aufweist, die eine auswechselbare Bohrbuchse (27,27a) trägt und unabhängig von der zugehörigen Spindel (25,25a) in Längsrichtung bewegbar ist.

6. Werkzeugmaschine nach einem der Ansprüche 1-5, **dadurch gekennzeichnet, dass** ein Werkzeugmagazin (32) vorgesehen ist, welches in unterschiedlichen Ebenen ein erstes Umlaufmagazin (33) für Werkzeuge und ein zweites Umlaufmagazin (34) für Bohrbuchsen aufweist.

7. Werkzeugmaschine nach Anspruch 6, **dadurch gekennzeichnet, dass** beide Umlaufmagazine (33,34) unabhängig voneinander getrennt angetrieben sind, derart, dass unterschiedliche Werkzeuge (26) mit derselben Bohrbuchse (27) ausrichtbar sind.

8. Werkzeugmaschine nach Anspruch 6 oder 7, **dadurch gekennzeichnet, dass** ein Gehäusedeckel (41) vorgesehen ist, der eine Öffnung (42) verschließt, durch die die vom Spindelkasten (24) abstehenden Werkzeuge (26,26a) für einen Werkzeugwechsel auf die Höhe des Werkzeugmagazins (32) hochgefahren werden können.

## Claims

1. Machine tool for working on crank shafts, comprising
a headstock (24) having at least two spindles (25, 25a) driving a tool (26, 26a), and
a work-piece support (16) with two chuck devices (20, 21) for holding two crank shafts (10a, 10b), the work-piece holder (16) being pivotable such that the longitudinal axis of the chucked crank shafts extends under an acute angle to the axial direction of the spindles (25, 25a),
**characterised in that**
the work-piece holder (16) supports the crank shafts with their longitudinal axes extending horizontally, is arranged on a turntable (15) pivotable about a vertical axis (A), and has a holder (19) pivotable about a horizontal axis (18), on which holder the chuck devices (20) are provided one above the other and which may be pivoted from a vertical position to a horizontal position for changing the work-pieces (10, 10a).

2. Machine tool of claim 1, **characterised in that** the turntable (15) is supported by a horizontal carriage (14) adapted to be moved horizontally under control.

3. Machine tool of claim 1 or 2, **characterised in that** the headstock (24) is mounted to a vertical carriage (22) for displacement towards the spindle axis, the carriage being movable on a fixed stand (12) between a working position and a lifted position, and **in that**, at the height of the lifted position, a tool magazine (32) is provided for a direct transfer of tools to and from the spindle (25, 25a).

4. Machine tool of claim 3, **characterised in that** the tool magazine (32) comprises at least one revolving magazine (33, 34) movable in a horizontal direction transverse to the longitudinal axis of the spindle (25, 25a).

5. Machine tool of one of claims 1-4, **characterised in that** the headstock (24) or the vertical carriage (22) comprises an associated drill bushing rod (29, 29a) for each spindle (25, 25a), which carries a replaceable drill bushing (27, 27a) and is movable in the longitudinal direction independent from the associated spindle (25, 25a).

6. Machine tool of one of claims 1-5, **characterised in that** a tool magazine (32) is provided, comprising, at different levels, a first revolving magazine (33) for tools and a second revolving magazine (34) for drill bushings.

7. Machine tool of claim 6, **characterised in that** both revolving magazines (33, 34) are driven independently and separately, such that different tools (26) may be oriented with the same drill bushing (27).

8. Machine tool of claim 6 or 7, **characterized in that** a housing lid (41) is provided that closes an opening (42) through which the tools (26, 26a) projecting from the headstock (24) can be moved up to the level of the tool magazine (32) for changing tools.

## Revendications

1. Machine-outil pour l'usinage de vilebrequins comprenant
un boîtier à broches (24) qui comporte au moins deux broches (25, 25a) entraînant un outil (26, 26a) et
un porte-pièce (16) avec deux dispositifs de serrage (20, 21) pour maintenir deux vilebrequins (10a, 10b), le porte-pièce (16) pouvant pivoter de manière à ce que l'axe longitudinal des vilebrequins fixés par serrage s'étende selon un angle aigu par rapport à l'axe des broches (25, 25a)
**caractérisée en ce que**
le porte-pièce (16) porte les vilebrequins avec des axes longitudinaux s'étendant à l'horizontale, est disposé sur un plateau rotatif (15) pouvant pivoter autour d'un axe (A) vertical et comporte un support (19) pouvant pivoter autour d'un axe horizontal (18), sur lequel les dispositifs de serrage (20) sont disposés l'un au-dessus de l'autre et qui peut pivoter d'une position verticale à une position horizontale pour le remplacement des pièces (10,10a).

2. Machine-outil selon la revendication 1, **caractérisée en ce que** le plateau rotatif (15) est porté par un chariot horizontal (14) mobile horizontalement de manière contrôlée.

3. Machine-outil selon la revendication 1 ou 2, **caractérisée en ce que** le boîtier à broches (24) est monté sur un chariot vertical (22) pouvant se déplacer dans la direction de l'axe de la broche, lequel chariot vertical peut être piloté sur un montant fixe (12) entre une position de travail et une position de levage, et **en ce qu'**un chargeur d'outils (32) est disposé à la hauteur de la position de levage pour un transfert direct des outils depuis et vers la broche (25, 25a).

4. Machine-outil selon la revendication 3, **caractérisée en ce que** le chargeur d'outils (32) comporte au moins un chargeur rotatif (33, 34) qui peut se déplacer à l'horizontale transversalement à l'axe longitudinal de la broche (25, 25a).

5. Machine-outil selon l'une quelconque des revendications 1 à 4, **caractérisée en ce que** le boîtier à broches (24) ou le chariot vertical (22) comporte pour chaque broche (25, 25a) une tige porte-canon de perçage (29, 29a) associée qui porte un canon de perçage (27,27a) amovible et qui peut être déplacée dans la direction longitudinale indépendamment de la broche correspondante (25, 25a).

6. Machine-outil selon l'une quelconque des revendications 1 à 5, **caractérisée en ce qu'**il est prévu un chargeur d'outils (32) qui comporte dans différents plans un premier chargeur rotatif (33) pour des outils et un deuxième chargeur rotatif (34) pour des canons de perçage.

7. Machine-outil selon la revendication 6, **caractérisée en ce que** les deux chargeurs rotatifs (33, 34) sont entraînés séparément, indépendamment l'un de l'autre, de manière à ce que différents outils (26) puissent être alignés avec le même canon de perçage (27).

8. Machine-outil selon la revendication 6 ou 7, **caractérisée en ce qu'**il est prévu un couvercle de boîtier (41) qui ferme une ouverture (42) à travers laquelle les outils (26, 26a) faisant saillie depuis le boîtier à broches (24) peuvent être levés à la hauteur du chargeur d'outils (32) afin de procéder à un changement d'outil.
